# EUROPEAN PATENT SPECIFICATION

(11) **EP 4 023 921 B1**
(45) Date of publication and mention of the grant of the patent: **22.01.2025**
(21) Application number: 20857469.9
(22) Date of filing: 25.08.2020
(51) Int. Cl.: F16L 43/00, F16L 37/091

(54) **FLOW PASSAGE STRUCTURE**
DURCHFLUSSKANALSTRUKTUR
STRUCTURE DE PASSAGE D'ÉCOULEMENT

(30) Priority: 26.08.2019 JP 2019153420
(43) Date of publication of application: 06.07.2022
(73) Proprietor: BRIDGESTONE CORPORATION, Chuo-ku Tokyo 104-8340 (JP)
(72) Inventor: KASHIWAMATA, Tomoaki, Tokyo 104-8340 (JP)
(74) Representative: Marks & Clerk LLP
(86) International application number: PCT/JP2020/032068
(87) International publication number: WO 2021/039804

(56) References cited:
- CN-A- 1 344 879
- CN-A- 103 411 077
- CN-A- 103 411 077
- DE-U1- 202017 102 366
- JP-A- 2001 116 182
- JP-A- 2001 116 182
- JP-A- 2006 506 247
- JP-A- 2012 082 621
- JP-A- 2018 123 882
- JP-A- S 627 522
- JP-U- 3 220 335

## Description

### Technical Field

The present disclosure relates to a flow path structure along which a fluid flows.

### Background Art

A bend-shaped pipe joint referred to as an elbow joint that is made of synthetic resin and includes straight sections on both sides of a bend section is a known example of a pipe joint for connecting water drainage pipes.

A conventional mold for molding such a bend-shaped pipe joint generally includes an upper mold and a lower mold for molding outer contours of the pipe j oint, a first slider pin for forming a flow path on one side of the pipe joint as demarcated by a bend-shaped central section, and a second slider pin for forming a flow path on the other side thereof.

The first slider pin and the second slider pin are provided to the mold so as to be capable of sliding along an axial direction. Thus, the flow path inside the bend section needs to be formed without reverse taper such that the first slider pin and the second slider pin can be extracted from the pipe joint after molding.

Namely, a radial direction distance of both the first slider pin and the second slider pin from a central axis to an outer peripheral face needs to be either uniform along the axial direction, or to decrease on progression toward a pin leading end side (in other words have a tapered shape).

Thus, although a portion of both the first slider pin and the second slider pin forming a wall face at a bend outer side of the bend section may be curved such that the radial direction distance gradually decreases on progression toward the leading end, a portion forming a bend inner side of the bend section has to be formed in a straight line shape so as to enable the slider pin to be extracted from the molded joint.

Thus, in the flow path at a bend section formed using the first slider pin and the second slider pin that slides in a direction orthogonal to the first slider pin configured as described above, although a curved face may be formed at the bend outer side, the straight section of the first slider pin and the straight section of the second slider pin abut each other at the bend inner side so as to form a right-angled corner.

Thus, when a fluid such as water flows along the pipe joint, the flow of water changes direction relatively smoothly along the curved face at the bend outer side. However, the flow changes direction suddenly due to the corner at the bend inner side, causing a vortex that resists the flow and leads to an increased loss in pressure.

Japanese Utility Model Registration No. 3220335 proposes a pipe joint to reduce pressure loss. Attention is also drawn to the disclosures of CN103411077B, JP2001-116182A and DE20-2017-102366U1.

### SUMMARY OF INVENTION

### Technical Problem

Japanese Utility Model Registration No. 3220335 discloses two pipe joint manufacturing methods. In the first manufacturing method, a leading end of a straight pin (what is referred to as a slider pin) that can be extracted in a straight line is provided with a curve-shaped movable block that is capable of sliding off the pin body in a circular arc. A pipe joint is molded using a mold in which a flow path at a bend section is molded using a moveable joint, and a flow path at a straight section is molded using the straight pin. However, in this first manufacturing method, the configuration of the pin is complex and so there are a large number of components configuring the mold.

In the second manufacturing method, a tube-shaped insert with a curved shape overall is disposed in a mold, and molten resin is injected into a cavity inside the mold such that the insert and the resin become an integral unit. However, presetting the curved insert in the mold when molding a pipe joint takes a lot of effort. Moreover, in cases in which the tube-shaped insert with a curved shape overall is molded using synthetic resin, a mechanism in which a curved pin is slid along the curve direction is required in a mold to form a curved flow path. The structure of the mold is therefore more complex and requires greater precision than in molds in which a straight pin is made to slide.

Thus, the first manufacturing method and the second manufacturing method both leave room for improvement with respect to manufacture.

In consideration of the above circumstances, an object of the present disclosure is to provide a flow path structure connecting plural flow paths extending in different directions that reduces pressure loss and is simple to manufacture.

### Solution to Problem

A flow path structure according to the present invention is provided as claimed in claim 1.

In the flow path structure according to the present invention, the plural flow paths each extending in a different direction are connected together, such that the flow-path inner corner is formed inside the flow path at the connecting section between the one flow path and the other flow path.

By disposing the adapter adjacent to the flow-path inner corner, the one flow path and the other flow path are coupled together at the curving curved flow path inner wall face, and fluid flows along this curving curved flow path inner wall face. Thus, fluid flows more smoothly and pressure loss is reduced compared to cases in which the flow suddenly changes direction at the flow-path inner corner.

The adapter is molded as a separate component to the members configuring the flow path structure, and can be attached to the members configuring the flow path structure post-production. Thus, unlike in the Background Art, there is no need for an operation to position and preset an insert in the molding processes of the members configuring the flow path structure, thereby enabling the effort required to mold the members configuring the flow path structure to be reduced compared to the Background Art.

Moreover, there is no need to provide the mold for molding the members configuring the flow path structure with a pin having a complex structure provided with a curve-shaped movable block at its leading end as in the Background Art in order to form the corner-less bending flow path. This enables the mold to be formed with a simple structure.

### Definition of Corner

Note that in the present disclosure, the corner is formed at a portion where flow paths extending in different directions are connected to one another, in other words the corner refers to a portion with a pointed shape at its leading end. However, in the present disclosure, the corner may also refer to cases in which the corner is slightly chamfered, for example with a chamfer dimension of no greater than 10% with respect to an internal diameter of the flow path, and to cases in which a rounded corner or the like is formed at the leading end. Advantageous Effects of Invention

As described above, the flow path structure of the present disclosure exhibits excellent advantageous effects of enabling the flow path structure connecting plural flow paths extending in different directions to be obtained that reduces pressure loss and is simple to manufacture.

### BRIEF DESCRIPTION OF DRAWINGS

Fig. 1 is a side view illustrating a pipe joint according to a first exemplary embodiment of the present disclosure, part of which is illustrated in cross-section.
Fig. 2 is a cross-section taken along an axial line illustrating a joint body.
Fig. 3 is a side view illustrating a joint body as viewed from a first straight section side.
Fig. 4 is an exploded perspective view illustrating a joint body and an adapter.
Fig. 5 is a side view illustrating a joint body inserted with an adapter, as viewed from a first straight section side.
Fig. 6A is a side view illustrating an adapter.
Fig. 6B is a front view illustrating an adapter.
Fig. 6C is a cross-section taken along an axial line illustrating an adapter.
Fig. 7 is a cross-section taken along an axial line illustrating a pipe joint according to a second exemplary embodiment.
Fig. 8 is a cross-section illustrating a mold for forming an adapter.

### DESCRIPTION OF EMBODIMENTS

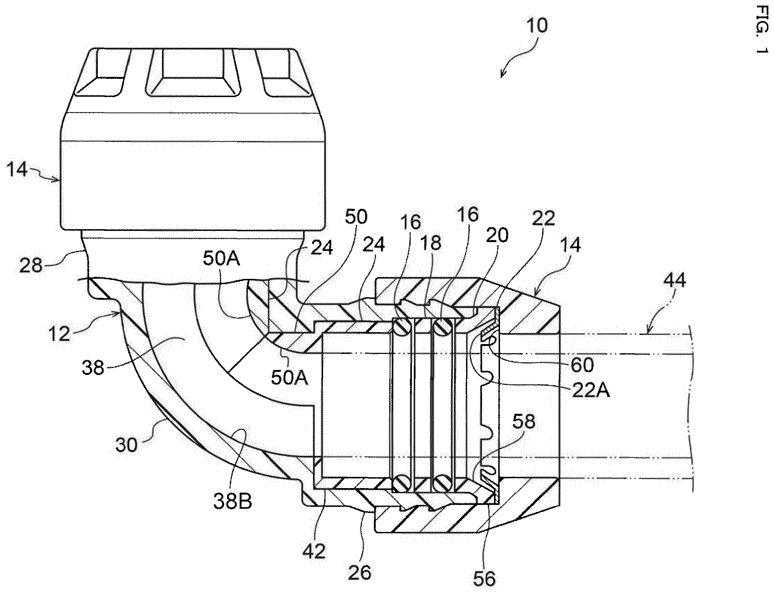

Explanation follows regarding a pipe joint 10 according to an exemplary embodiment applied with a flow path structure of the present disclosure, with reference to Fig. 1 to Figs. 6. Note that in the present exemplary embodiment, a circular shape refers to a true circle (a dimensional error of for example approximately ±5% being permitted for the radius), whereas a non-circular shape refers to a shape that is not a true circle, such as an elliptical shape.

As illustrated in Fig. 1, as an example, the pipe joint 10 of the present exemplary embodiment connects together pipes employed in supplying water or the like, and is what is referred to as an elbow pipe joint formed with an L-shaped profile in side view.

### Overall Configuration of Pipe Joint

The pipe joint 10 is configured including a joint body 12, a cap 14, seal members 16, a spacer 18, a retention ring 20, a lock ring 22, an adapter 24, and so on.

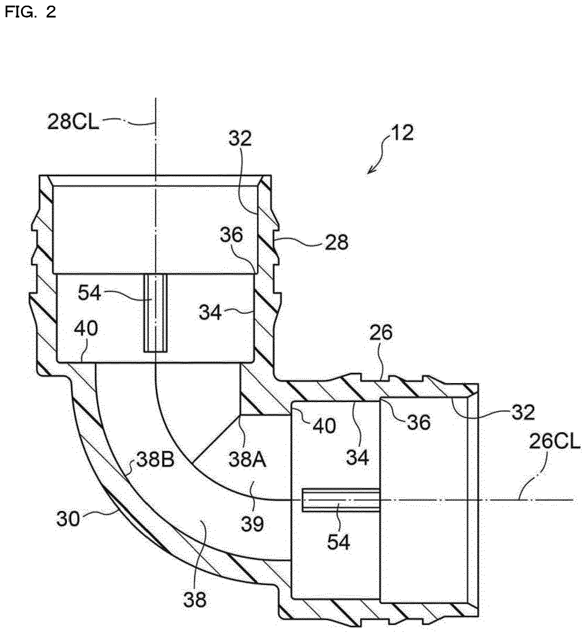

As illustrated in Fig. 2, as an example, the joint body 12 of the present exemplary embodiment is a molded component made of synthetic resin, and is formed with an L-shaped profile in side view. The joint body 12 includes a circular tube-shaped first straight section 26 extending in a straight line, a circular tube-shaped second straight section 28 extending in a straight line in a direction orthogonal to the first straight section 26, and a tube-shaped bend section 30 that connects between the first straight section 26 and the second straight section 28.

Since the first straight section 26 and the second straight section 28 have the same configuration and the same dimensions, explanation only follows regarding the first straight section 26. Note that same reference numerals are allocated to configuration of the second straight section 28 that is the same as that of the first straight section 26, and explanation thereof is omitted.

As illustrated in Fig. 2, a first housing area 32 that has a uniform diameter along its axial direction and a circular shape in cross-section perpendicular to its axial direction is provided inside the first straight section 26 at an opening side of the first straight section 26 (the opposite side to the bend section 30). A second housing area 34 that has a uniform diameter along its axial direction and a circular shape that is slightly smaller in diameter than the first housing area 32 in cross-section perpendicular to its axial direction is also provided inside the first straight section 26 at a back side of the first housing area 32 (the bend section 30 side). A first step 36 is thereby formed between the first housing area 32 and the second housing area 34 inside the joint body 12.

A bending flow path 38 is provided bending inside the bend section 30 so as to follow its axial line in cross-section view. A corner 38A is provided at a bend inner side, and a curved bend-outer-side curved flow-path face 38B is provided at a bend outer side, of the bending flow path 38.

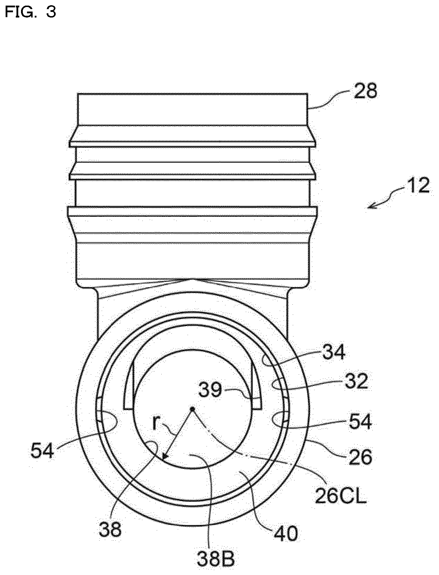

As illustrated in Fig. 3, as viewed from the direction of an axial line 26CL of the first straight section 26, the half of an end portion of the bending flow path 38 that is on the curved bend-outer-side curved flow-path face 38B side of the axial line 26CL has a shape (a cross-section profile perpendicular to its axis) that is semicircular with a radius r. However, the half of the end portion that is on the opposite side to the curved bend-outer-side curved flow-path face 38B side of the axial line 26CL has a non-semicircular shape (half of a substantially elliptical shape), such that the end portion has a substantially elliptical shape overall.

Note that, in the present exemplary embodiment as an example, the profile of the corner 38A-side half of the bending flow path 38 in cross-section perpendicular to its axis gradually approaches a semicircular shape on progression from the end portion toward an axial direction central portion of the bending flow path 38. Thus, as viewed overall, the profile of the bending flow path 38 in cross-section perpendicular to its axis gently changes from a substantially elliptical shape to a substantially circular shape on progression from the end portion toward the axial direction central portion.

An internal diameter (opening area) of the end portion of the bending flow path 38 is smaller than an internal diameter (opening area) of the second housing area 34 of the first straight section 26. Thus, a second step 40 is formed between the bending flow path 38 and the second housing area 34 inside the joint body 12.

### Adapter

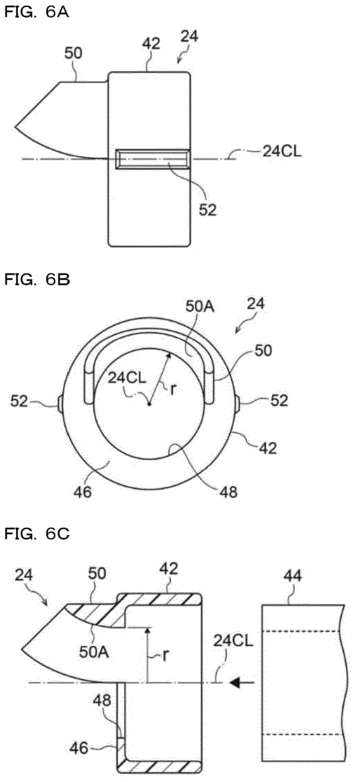

As illustrated in Fig. 1, Fig. 4, and Fig. 5, the adapter 24 illustrated in Figs. 6A, 6B, and 6C is configured as a separate body to the joint body 12 and is inserted into the second housing area 34 of the first straight section 26 and the bending flow path 38. In the present exemplary embodiment as an example, the adapter 24 is a molded component made of synthetic resin.

As illustrated in Fig. 1 and Figs. 6A, 6B, and 6C, the adapter 24 includes a circular tube shaped main body 42 for insertion into the second housing area 34 of the first straight section 26. An external diameter of the main body 42 is slightly smaller than an internal diameter of the second housing area 34 so as to enable insertion into the second housing area 34. An internal diameter of the main body 42 is slightly larger than an internal diameter of a pipe 44 (see Fig. 1) so as to enable insertion of the pipe 44.

A ring shaped wall 46 is integrally formed to one end side of the main body 42. The wall 46 is formed with a circular hole 48 that has a smaller diameter than the internal diameter of the main body 42 and the same diameter as the internal diameter of the pipe 44. The circular hole 48 is formed coaxially to the main body 42.

A protrusion 50 is integrally formed to an outer face (a face on the opposite side to the main body 42) of the wall 46. As illustrated in Fig. 6B, the protrusion 50 is curved as viewed along the axial direction. As illustrated in Fig. 6C, an inner peripheral face 50A of the protrusion 50 is curved in a circular arc shape.

As illustrated in Fig. 2 to Fig. 4, a recess 39 into which the protrusion 50 is fitted is formed in an inner peripheral face of the bend section 30 of the joint body 12. Thus, the attachment orientation, in other words the positioning, of the protrusion 50 is set by inserting and fitting the protrusion 50 into the recess 39.

In the present exemplary embodiment, by inserting and fitting the protrusion 50 into the recess 39, a leading end of the protrusion 50 of one adapter 24 and a leading end of the protrusion 50 of another adapter 24 can be made to contact each other.

As illustrated in Figs. 6B and 6C, the inner peripheral face 50A of the protrusion 50 is smoothly linked to an inner peripheral face of the circular hole 48 in the wall 46 without any unevenness. The profile of the inner peripheral face 50A in cross-section perpendicular to its axis is a circular arc shape with a radius of curvature r that is the same as the inner peripheral face of the circular hole 48, in other words a semicircular shape. The circular arc shape of the inner peripheral face 50A with the radius r spans from circular hole 48 to the leading end of the protrusion 50.

As illustrated in Fig. 1, an adapter 24 is also inserted into the second straight section 28. Thus, the leading end of the protrusion 50 of one adapter 24 inserted into the first straight section 26 and the leading end of the protrusion 50 of the other adapter 24 inserted into the second straight section 28 contact one another.

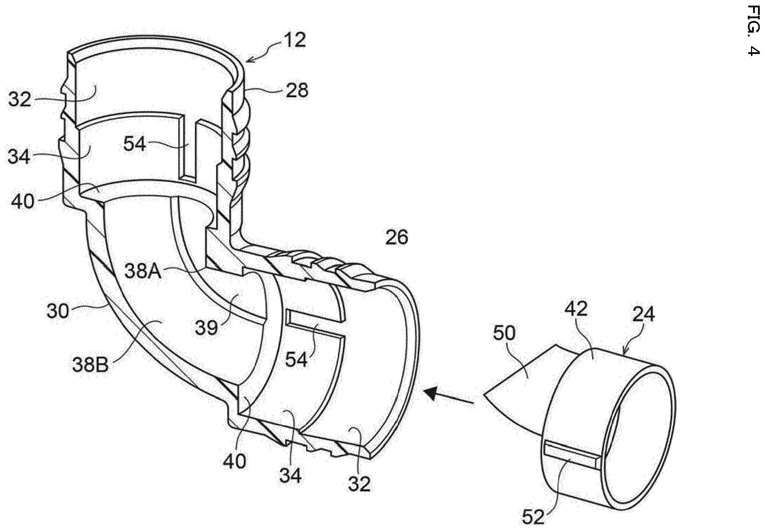

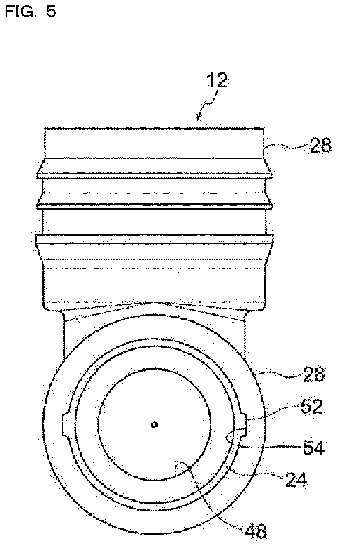

As illustrated in Fig. 4 and Figs. 6A and 6B, a pair of protrusions 52 that extend along the axial direction are formed to an outer peripheral portion of the main body 42 of the adapter 24. As illustrated in Fig. 4 and Fig. 5, a pair of grooves 54 that extend along an axial line direction are formed in the second housing area 34 of the joint body 12 where the main body 42 is inserted. The protrusions 52 of the adapter 24 engage (fit together) with the grooves 54.

Note that configuration is preferably such that friction between the protrusions 52 and the grooves 54 when the protrusions 52 are inserted into the grooves 54 enables the adapter 24 to be retained. For example, friction between the protrusions 52 and the grooves 54 may be generated by making the width of the protrusions 52 slightly larger than the width of the grooves 54, or making the height of the protrusions 52 slightly larger than the depth of the grooves 54. This enables the adapter 24 to be suppressed from falling out after the adapter 24 has been inserted into the joint body 12.

Note that it is also possible to make the diameter of the main body 42 slightly larger than the internal diameter of the second housing area 34, enabling the adapter 24 to be press-fit into the second housing area 34 such that friction between the inner peripheral face of the main body 42 and an inner peripheral face of the second housing area 34 retains the adapter 24 inside the joint body 12.

As illustrated in Fig. 1, the seal member 16 formed from an elastic material such as rubber as an example, the spacer 18 formed from synthetic resin as an example, the seal member 16, and the retention ring 20 formed from synthetic resin as an example, are inserted into the first housing area 32 of the first straight section 26 in sequence from the back side (the second housing area 34 side).

One end side of the retention ring 20 is disposed inside the first housing area 32. A large diameter portion 56 with a larger diameter than the one end side is formed at another end side of the retention ring 20. The large diameter portion 56 is disposed outside the end portion of the first straight section 26. A tapered lock ring retaining portion 58 that gradually increases in diameter on progression toward the other end side is formed around an inner periphery of the other end side of the retention ring 20.

The cap 14 is formed in a circular tube shape, and is fitted onto an outer periphery of the first straight section 26. A step 60 is formed inside the cap 14. The large diameter portion 56 of the retention ring 20 and an outer peripheral portion of the lock ring 22 are sandwiched between the step 60 and the end portion of the first straight section 26. By fitting the cap 14 onto the outer periphery of the first straight section 26 in this manner, the adapter 24, the seal members 16, the spacer 18, the lock ring retaining portion 58, and the lock ring 22 are prevented from detaching from the first straight section 26.

Plural claws 22Athat catch onto an outer peripheral face of the pipe 44 so as to suppress the pipe 44 from detaching are formed to an inner peripheral portion of the lock ring 22.

Namely, the pipe joint 10 of the present exemplary embodiment is what is referred to as a one-touch joint that suppresses the pipe 44 from detaching simply by the pipe 44 being inserted therein.

### Operation and Advantageous Effects

Next, explanation follows regarding the sequence in which the pipe 44 is connected to the pipe joint 10 of the present exemplary embodiment, as well as operation and advantageous effects.

First, in order to connect the pipe 44 to the pipe joint 10, the pipe 44 is inserted into the joint body 12 through an opening in the cap 14. The pipe 44 is inserted until a leading end thereof abuts the wall 46 of the adapter 24.

Note that the adapter 24 may be either inserted into the joint body 12 in advance when the pipe joint 10 is assembled at the manufacturing plant, or inserted into the joint body 12 when the pipe 44 is inserted at a construction site. In the pipe joint 10 of the present exemplary embodiment, friction is generated when the protrusions 52 provided to the adapter 24 are inserted into the grooves 54 provided to the joint body 12, such that the adapter 24 can be suppressed from detaching without having to use adhesive or the like.

When the pipe 44 is inserted into the pipe joint 10 in this manner, the claws 22A on the inner peripheral side of the lock ring 22 catch onto the outer peripheral face of the pipe 44, such that the pipe 44 is suppressed from detaching. The seal members 16 disposed between the pipe 44 and the first housing area 32 make close contact with the outer peripheral face of the pipe 44 and an inner peripheral face of the first housing area 32, such that any gaps between the pipe 44 and the joint body 12 are sealed off by the seal members 16, and water flowing inside the pipe joint is suppressed from leaking out.

In a state in which the leading end of the pipe 44 is abutting the wall 46 of the adapter 24, the axial line of the pipe 44 and the axial line of the circular hole 48 formed in the wall 46 of the adapter 24 are aligned, such that the flow path inside the pipe 44 and the circular hole 48 are smoothly linked together without any unevenness.

Once both the adapters 24 have been attached to the joint body 12, the protrusions 50 of the adapters 24 are disposed adjacent to the corner 38A of the bending flow path 38 so as to cover the corner 38A, such that the inner peripheral faces 50A of the two protrusions 50 are linked together to form a curved face at the bend inner side of the bending flow path 38 as illustrated in Fig. 1. Thus, fluid flowing at the bend inner side of the bending flow path 38 changes direction more smoothly than in cases in which the corner 38A is exposed, thereby enabling pressure loss to be reduced.

Furthermore, the bending flow path 38 of the bend section 30 to which the adapter 24 is attached is bordered by the curved bend-outer-side curved flow-path face 38B at the bend outer side thereof and the inner peripheral face 50A of the protrusion 50 at the bend inner side thereof so as to have a circular cross-section profile with the same diameter as the flow path of the pipe 44. Thus, the cross-section profile of the flow path does not change mid-flow, thereby enabling pressure loss that would arise due to the cross-section profile of the flow path changing mid-flow to be suppressed.

The pipe joint 10 of the present exemplary embodiment has the same configuration on either side of the bend section 30, namely on both the first straight section 26 side and the second straight section 28 side. Thus, there is no directionality when attaching pipes to the pipe joint 10, thereby enabling fluid to flow smoothly from one pipe 44 to the other pipe 44, and also enabling fluid to flow smoothly from the other pipe 44 to the one pipe 44.

The adapter 24 is molded as a separate component to the joint body 12, and may be attached to the joint body 12 post-production. Thus, unlike in the Background Art, there is no operation to position and preset an insert in the joint body 12 molding process, thereby enabling the effort required to mold the joint body 12 to be reduced.

Moreover, the joint body 12 of the present exemplary embodiment forms a bending flow path in which the bend inner side and the bend outer side are both curved faces. Thus, there is no need to provide the mold with a pin with a complex structure in which a curve-shaped movable block is provided at a leading end thereof, thereby enabling the joint body 12 to be molded using a mold with a simple structure.

Furthermore, although the bending flow path 38 of the bend section 30 has a substantially elliptical shaped cross-section profile perpendicular to its axial line, the adapters 24 are inserted into the first straight section 26 and the second straight section 28, such that the protrusions 50 of the adapters 24 are disposed at the portion where the cross-section profile of the bending flow path 38 has a non-semicircular shape. This enables a flow path with a circular cross-section (a true circle) to be formed inside the bend section 30 by the curved bend-outer-side curved flow-path face 38B configuring part of an inner wall face of the bend section 30 with a semicircular cross-section profile perpendicular to its axis, and by inner peripheral faces of the protrusions 50 that each have a semicircular cross-section profile.

When the pipes 44 are respectively inserted into the first straight section 26 and the second straight section 28 of the pipe joint 10 in the manner described above, the flow path with a circular cross-section profile inside one of the pipes 44 and the flow path with a circular cross-section profile inside the other of the pipes 44 are connected through the circular cross-sectioned flow path inside the bend section 30 that has the same circular cross-section profile and is formed with the same internal diameter as the pipes 44. This enables water to flow smoothly from the first straight section 26 side toward the second straight section 28, and from the second straight section 28 side toward the first straight section 26, and also enables an increase in pressure loss occurring in cases in which the flow path bends and the cross-section profile of the flow path changes at the bend section (changes from a circular cross-section to an elliptical cross-section) to be suppressed.

### Second Exemplary Embodiment

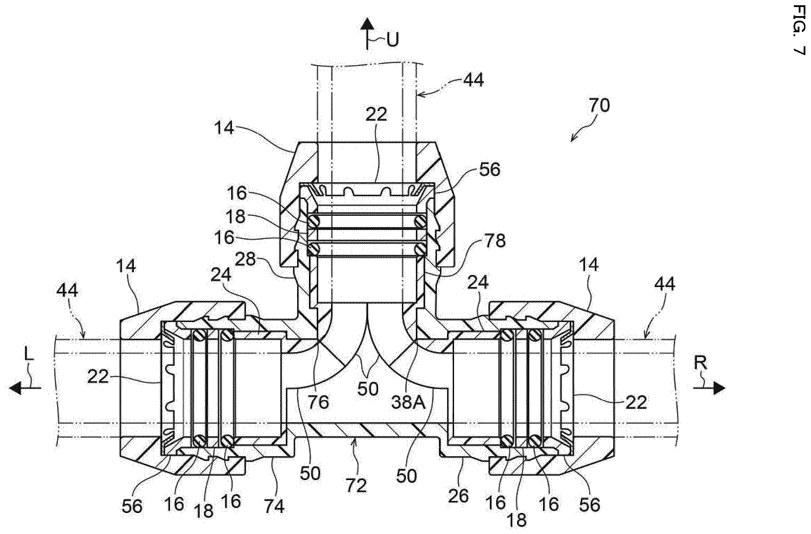

Next, explanation follows regarding a pipe joint 70 according to a second exemplary embodiment, with reference to Fig. 7. Note that configuration that is the same as that in the first exemplary embodiment is allocated the same reference numerals, and explanation thereof is omitted.

As illustrated in Fig. 7, the pipe joint 70 of the present exemplary embodiment is a T-shaped one-touch joint referred to as Tee pipe joint.

The pipe joint 70 is formed with line symmetry on either side of the second straight section 28, and includes a T-shaped joint body 72. A third straight section 74 with the same structure as the first straight section 26 is formed so as to face in the opposite direction to the first straight section 26 on the opposite side of the joint body 72 to the first straight section 26. A corner 76 is thereby formed by the orthogonal second straight section 28 and third straight section 74 inside the joint body 72.

Note that whereas an extension direction of the first straight section 26 is an arrow R direction (a first direction), an extension direction of the third straight section 74 is an arrow L direction (a second direction) that is the opposite direction to the arrow R direction. An extension direction of the second straight section 28 is an arrow U direction (a third direction) that is orthogonal to both the arrow R extension direction of the first straight section 26 and the arrow L extension direction of the third straight section 74.

A pair of protrusions 50 that both face in opposite directions to a radial direction are provided to an adapter 78 of the present exemplary embodiment that is inserted into the second straight section 28.

When the adapter 78 is inserted into the second straight section 28, the protrusion 50 of the adapter 24 inserted into the third straight section 74 and one of the protrusions 50 of the adapter 78 inserted into the second straight section 28 are disposed adjacent to the corner 76 so as to cover the corner 76, and a curving curved flow-path inner wall face is formed by the inner peripheral faces 50A of the respective protrusions 50.

This enables water to flow smoothly from the second straight section 28 side toward the third straight section 74 side, and from the third straight section 74 side toward the second straight section 28 side, thereby enabling pressure loss to be reduced in this case also. In particular, a smoothly curving (corner-less) flow path cannot be formed to the pipe joint 70 formed with a T-shape referred to as a Tee pipe joint by injection molding. Thus, the advantageous effects of applying the present disclosure to the present exemplary embodiment are great, in other words a configuration in which the present exemplary embodiment is applied with the present disclosure is highly advantageous.

### Other Exemplary Embodiments

Although exemplary embodiments of the present disclosure have been described above, the present disclosure is not limited to the above description, and obviously various other modifications may be implemented within a range that lies within the scope of the claims.

In the first exemplary embodiment, an example was described in which the present disclosure was applied to an L-shaped pipe joint 10 referred to as an elbow pipe j oint, whereas in the second exemplary embodiment, an example was described in which the present disclosure was applied to an T-shaped pipe joint 70 referred to as a Tee pipe joint. However, the present disclosure may be applied to joints other than elbow or Tee joints, such as a cross-shaped pipe joint, and may be applied to flow path structures other than pipe joints, such as a pipe that simply bends. As an example of a cross-shaped pipe joint, the pipe joint of the second exemplary embodiment may be provided with a fourth straight section with the same configuration as the second straight section 28 on the opposite side to the second straight section 28.

Although an angle formed by the first straight section 26 and the second straight section 28 is 90° in the pipe joint 10 of the first exemplary embodiment, an angle other than 90° may be formed.

The joint body 12 may be molded using a transparent synthetic resin such that presence or absence of the adapter 24 is easily determined from the exterior.

Although the pipe joint 10 of the above exemplary embodiment is what is referred to as a one-touch joint in which the pipe 44 is held in place simply by being inserted, the configuration of the connecting section to the pipe 44 is not limited to the configuration of the above exemplary embodiment. Another, conventionally known configuration (such as screw fastening) may be applied.

Although the adapter 24 of the above exemplary embodiments includes the circular tube shaped main body 42, as long as at the least protrusion 50 is provided, the main body 42 does not necessarily have to be provided. Alternatively, the main body 42 may be configured by half of a circular tube shape.

Although the protrusions 52 for retaining the adapter 24 in the joint body 12 are provided to the main body 42 in the pipe joint 10 of the above exemplary embodiment, the protrusions 52 and the grooves 54 in the joint body 12 may be omitted if not required.

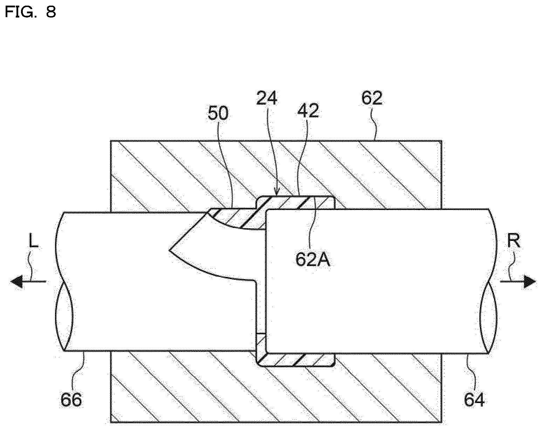

The adapter 24 described above is a molded component made of synthetic resin, and as an example, may be molded using a mold 62 such as that illustrated in Fig. 8.

The mold 62 is provided with a recess 62A for forming an outer side of the adapter 24. The mold 62 is also provided with a first slider pin 64 for forming an inner side of the main body 42 of the adapter 24, and a second slider pin 66 for forming an inner side of the protrusion 50 and the circular hole 48, these slider pins being capable of moving in and out of the mold 62. Note that as an example, the mold 62 is capable of being divided into two parts in either an up-down direction in Fig. 8, or a depth direction of the page in Fig. 8.

Molten synthetic resin is injected into the recess 62A in the mold 62 and into a cavity formed by the first slider pin 64 and the second slider pin 66. After the synthetic resin has cooled, the first slider pin 64 and the second slider pin 66 are removed and the mold 62 is opened up to obtain the adapter 24.

Attention is also drawn to the disclosure of Japanese Patent Application No. 2019-153420 filed on August 26, 2019.

## Claims

1. A flow path structure that connects together a plurality of flow paths each extending in a different direction, the flow path structure comprising:
a joint body (12) comprising a flow-path inner corner (38A) formed at a connecting section between one of the flow paths and another of the flow paths; and
an adapter (24) disposed adjacent to the flow-path inner corner (38A) so as to couple together the one of the flow paths and the other of the flow paths, at a curving curved flow-path inner wall face,
wherein:
the adapter (24) includes a protrusion (50) that projects toward a flow path inner side so as to form the curved flow-path inner wall face;
a retainer portion (52) is provided at the adapter;
a retaining portion (54) that engages with the retainer portion (52) so as to retain the adapter (24) inside the flow path is provided at a flow path inner face;
the adapter (24) includes a tubular section (42) for insertion into the flow path;
the protrusion (50) is provided at one axial direction end side of the tubular section (42);
the retainer portion (52) is provided at an outer peripheral portion of the tubular section (42); **characterized in that**
the retainer portion (52) comprises a pair of protrusions (52) that extend along the axial direction and are formed to an outer peripheral portion of the tubular section (42) which forms a main body (42) of the adapter (24);
a retaining portion (54) comprises a pair of grooves (54) that extend along an axial line direction and are formed in a housing area (34) of the joint body (12) where the main body (42) is inserted, and
the protrusions (52) of the adapter (24) engage with the grooves (54).

2. The flow path structure of claim 1, wherein the flow-path inner corner (38A) is configured by connecting the one of the flow paths and the other of the flow paths together at a right angle.

3. The flow path structure of claim 1 or 2, wherein:
the plurality of flow paths includes:
a first flow path extending along a first direction;
a second flow path extending along a second direction that is an opposite direction to the first direction; and
a third flow path extending along a third direction that is orthogonal to the first direction and the second direction.

## Patentansprüche

1. Strömungswegstruktur, die eine Vielzahl von Strömungswegen miteinander verbindet, die sich jeweils in eine andere Richtung erstrecken, wobei die Strömungswegstruktur Folgendes umfasst:
einen Verbindungskörper (12), der eine innere Strömungswegecke (38A) umfasst, die an einem Verbindungsteil zwischen einem der Strömungswege und einem anderen der Strömungswege ausgebildet ist; und
einen Adapter (24), der angrenzend an die innere Strömungswegecke (38A) angeordnet ist, um den einen der Strömungswege und den anderen der Strömungswege an einer gebogenen gekrümmten Strömungsweg-Innenwandfläche miteinander zu koppeln,
wobei:
der Adapter (24) einen Vorsprung (50) einschließt, der in Richtung einer Strömungsweg-Innenseite vorsteht, um die gekrümmte Strömungsweg-Innenwandfläche auszubilden;
ein Halteabschnitt (52) an dem Adapter bereitgestellt ist;
ein Abschnitt zum Halten (54), der mit dem Halteabschnitt (52) in Eingriff steht, um den Adapter (24) innerhalb des Strömungswegs zu halten, an einer Innenfläche des Strömungswegs bereitgestellt ist;
der Adapter (24) einen rohrförmigen Teil (42) zum Einführen in den Strömungsweg einschließt;
der Vorsprung (50) an einer axial gerichteten Endseite des rohrförmigen Teils (42) bereitgestellt ist;
der Halteabschnitt (52) an einem äußeren Umfangsabschnitt des rohrförmigen Teils (42) bereitgestellt ist; **dadurch gekennzeichnet, dass**
der Halteabschnitt (52) ein Paar Vorsprünge (52) umfasst, die sich entlang der axialen Richtung erstrecken und an einem äußeren Umfangsabschnitt des rohrförmigen Teils (42) ausgebildet sind, der einen Hauptkörper (42) des Adapters (24) ausbildet;
ein Abschnitt zum Halten (54) ein Paar Nuten (54) umfasst, die sich entlang einer axialen Linienrichtung erstrecken und in einem Gehäusebereich (34) des Verbindungskörpers (12) ausgebildet sind, wo der Hauptkörper (42) eingeführt wird, und
die Vorsprünge (52) des Adapters (24) in die Nuten (54) eingreifen.

2. Strömungswegstruktur nach Anspruch 1, wobei die innere Strömungswegecke (38A) durch Verbinden in einem rechten Winkel des einen der Strömungswege mit dem anderen der Strömungswege konfiguriert ist.

3. Strömungswegstruktur nach Anspruch 1 oder 2, wobei:
die Vielzahl von Strömungswegen Folgendes einschließt:
einen ersten Strömungsweg, der sich entlang einer ersten Richtung erstreckt;
einen zweiten Strömungsweg, der sich entlang einer zweiten Richtung erstreckt, die eine zur ersten Richtung entgegengesetzte Richtung ist; und
einen dritten Strömungsweg, der sich entlang einer dritten Richtung erstreckt, die orthogonal zur ersten Richtung und zur zweiten Richtung ist.

## Revendications

1. Structure de voies d'écoulement qui connecte une pluralité de voies d'écoulement les unes aux autres, s'étendant chacune dans une direction différente, la structure de voies d'écoulement comprenant :
un corps de liaison (12) comprenant un coin interne de la voie d'écoulement (38A) formé au niveau d'une section de connexion entre l'une des voies d'écoulement et une autre des voies d'écoulement ; et
un adaptateur (24) disposé de manière adjacente au coin interne de la voie d'écoulement (38A) de sorte à coupler l'une à l'autre ladite une des voies d'écoulement et ladite autre des voies d'écoulement au niveau d'une face de paroi interne courbée incurvée de voie d'écoulement,
dans laquelle :
l'adaptateur (24) inclut une saillie (50) qui fait saillie vers un côté interne de la voie d'écoulement, de sorte à former la face de paroi interne courbée de la voie d'écoulement ;
une partie de retenue (52) est fournie au niveau de l'adaptateur ;
une partie pour la retenue (54) qui s'engage dans la partie de retenue (52) de sorte à retenir l'adaptateur (24) à l'intérieur de la voie d'écoulement est fournie au niveau d'une face interne de la voie d'écoulement ;
l'adaptateur (24) inclut une section tubulaire (42) destinée à être insérée dans la voie d'écoulement ;
la saillie (50) est fournie au niveau d'un côté d'extrémité, dans la direction axiale, de la section tubulaire (42) ;
la partie de retenue (52) est fournie au niveau d'une partie périphérique externe de la section tubulaire (42) ; **caractérisée en ce que** :
la partie de retenue (52) comprend une paire de saillies (52) qui s'étendent dans la direction axiale et sont formées sur une partie périphérique externe de la section tubulaire (42) qui forme un corps principal (42) de l'adaptateur (24) ;
une partie pour la retenue (54) comprend une paire de rainures (54) qui s'étendent dans une direction de ligne axiale et sont formées dans une zone de logement (34) du corps de liaison (12) où le corps principal (42) est inséré, et
les saillies (52) de l'adaptateur (24) s'engagent dans les rainures (54).

2. Structure de voies d'écoulement selon la revendication 1, dans laquelle le coin interne de la voie d'écoulement (38A) est configuré en connectant ladite une des voies d'écoulement et ladite autre des voies d'écoulement l'une à l'autre à angle droit.

3. Structure de voies d'écoulement selon les revendications 1 ou 2, dans laquelle :
la pluralité de voies d'écoulement inclut :
une première voie d'écoulement s'étendant dans une première direction ;
une deuxième voie d'écoulement s'étendant dans une deuxième direction qui est une direction opposée à la première direction ; et
une troisième voie d'écoulement s'étendant dans une troisième direction qui est orthogonale à la première direction et à la deuxième direction.
